# EUROPEAN PATENT SPECIFICATION

(11) **EP 2 030 777 B1**
(45) Date of publication and mention of the grant of the patent: **14.05.2014**
(21) Application number: 07742232.7
(22) Date of filing: 24.04.2007
(51) Int. Cl.: B32B 15/06, C08K 3/06, C08K 3/22, C08K 5/39, C08L 9/02, C09K 3/10

(54) **RUBBER-METAL LAMINATE**
KAUTSCHUK-METALL-LAMINAT
STRATIFIÉ MÉTAL-CAOUTCHOUC

(30) Priority: 16.06.2006 JP 2006166795; 06.12.2006 JP 2006329057
(43) Date of publication of application: 04.03.2009
(73) Proprietor: NOK Corporation, Tokyo 105-8585 (JP)
(72) Inventor: HIGASHIRA, Toshihiro, Fujisawa-shi Kanagawa 251-0042 (JP); YOKOTA, Atsushi, Fujisawa-shi Kanagawa 251-0042 (JP); MATSUMOTO, Naoki, Fujisawa-shi Kanagawa 251-0042 (JP)
(74) Representative: HOFFMANN EITLE
(86) International application number: PCT/JP2007/058797
(87) International publication number: WO 2007/145026

(56) References cited:
- EP-A1- 0 283 552
- JP-A- 06 025 308
- JP-A- 11 034 218
- JP-A- 56 135 533
- JP-A- 2002 265 683
- JP-A- 2002 293 998
- JP-A- 2004 240 402
- JP-B2- 06 074 352
- DATABASE WPI Week 199918 Thomson Scientific, London, GB; AN 1999-210929 XP002664416, -& JP 11 049897 A (SUMITOMO RUBBER IND LTD) 23 February 1999 (1999-02-23)
- DATABASE WPI Week 200205 Thomson Scientific, London, GB; AN 2002-038147 XP002664417, -& KR 2001 0045644 A (KUMHO EXPRESS CO LTD) 5 June 2001 (2001-06-05)

## Description

### TECHNICAL FIELD

The present invention relates to a rubber-metal laminate, and more particularly to a nitrile rubber-metal laminate for use as an effective seal material, etc.

### BACKGROUND ART

Nitrile rubber-metal laminates comprising a metallic sheet and a nitrile rubber vulcanizate layer formed thereon through an adhesive, as disclosed, for example, in the following Patent Literature 1, have been so far practically used.
Patent Literature 1 : JP-A-2000-6308

Tetramethylthiuram disulfide (Noccelar TT, a product of Ouchi-Shinko Chemical Co., Ltd.) has been used as a vulcanization promoter in the NBR composition to form a nitrile rubber layer, where dangerous substances generated therefrom, such as not only N-nitrosodimethylamine, but also N-nitrosodiethylamine, N-nitrosodibutylamine, N-nitrosopiperidine, N-nitrosomorpholine, N-nitrosomethylphenylamine, and N-nitrosoethylphenylamine, are classified into the nitroamines, which are controlled items under Article No.552 (TRGS552) of Technische Regeln fur Gefahrstoffe, German Law setting forth technical regulations on dangerous substances, and also in controlled substances set forth in Pollutant Release and Transfer Register (PRTR), and are now subjected to voluntary reduction.

Thus, a NBR composition has been now desired, which can provide a rubber having desired physical properties without using any vulcanization promoters capable of generating controlled substances set forth in TRGS552, PRTR, etc. such as 2-(N,N-diethylthiocarbamoylthio)-benzothiazole, 2-(4'-morpholinodithio)benzothiazole, N-oxydiethylene-2-benzothiazolyl sulfenamide, tetramethylthiuram disulfide, tetraethylthiuram disulfide, tetrabutylthiuram disulfide, tetramethylthiuram monosulfide, dipentamethylenethiuram tetrasulfide, piperidine pentamethylenedithiocarbamate, zinc dimethyldithiocarbamate, zinc diethyldithiocarbamate, zinc dibutyldithiocarbamate, zinc N-ethyl-N-phenyldithiocarbamate, zinc N-pentamethylenedithiocarbamate, sodium dibutyldithiocarbamate, copper dimethyldithiocarbamate, ferric dimethyldithiocarbamate, tellurium diethyldithiocarbamate, trimethylthiourea, etc.

### DISCLOSURE OF THE INVENTION

### PROBLEM TO BE SOLVED BY THE INVENTION

The object of the present invention is to provide a nitrile rubber-metal laminate for use as an effective seal material, which comprises a metallic sheet and a rubber layer formed on the metallic sheet without lowering vulcanizate physical properties or vulcanization rate and also without generating nitrosoamines as controlled substances set forth in TRGS552, PRTR, etc.

### MEANS FOR SOLVING THE PROBLEM

The object of the present invention can be attained by a rubber-metal laminate, which comprises a metallic sheet and a rubber layer formed on the metallic sheet, the rubber layer being formed from an NBR composition comprising (A) 100 parts by weight of nitrile rubber, (B) 0.1-5 parts by weight of sulfur, and (C) 0.5-10 parts by weight of at least one sulfur donor compound selected from tetrabenzylthiuram disulfide, tetrakis(2-ethylhexyl)thiuram disulfide, zinc tetrabenzyldithiocarbamate, and 1,6-bis(N,N-dibenzylthiocarbamodithio)hexane, and preferably the NBR composition further containing (D) 3-100 parts by weight of silica and (E) 60-200 parts by weight of aluminum oxide having an average particle size of 0.1-10µ m, as a rubber layer-forming composition.

### EFFECT OF THE INVENTION

The present rubber-metal laminate can be effectively formed without generating various nitrosoamines as controlled items set forth in TRGS552, PRTR, etc., without lowering vulcanizate physical properties and vulcanization rate during lamination of a rubber layer onto a metallic sheet.

### BEST MODES FOR CARRYING OUT THE INVENTION

Acrylonitrile-butadiene copolymer rubber having a combined acrylonitrile content of 18-48%, preferably 31-42%, and a Mooney viscosity ML₁₋₄(100°C) of 30-85, preferably 40-70, can be used as a nitrile rubber (NBR) of Component (A), where commercially available products can be practically used directly as such. When the combined acrylonitrile content is less than 18%, the adhesiveness of the rubber layer towards the adhesive used for rubber layer lamination will be unsatisfactory, whereas when the combined acrylonitrile content is more than 48%, the cold resistance will be deteriorated. When the Mooney viscosity is less than 30, the frictional abrasion resistance will be unsatisfactory, whereas when the Mooney viscosity is more than 85, the kneadability will be deteriorated.

Vulcanization of NBR can be carried out by sulfur vulcanization, or in combination with any other vulcanization system such as peroxide vulcanization, etc. Sulfur as Component (B) can be used in a proportion of 0.1-5 parts by weight, preferably 1.5-3 parts by weight, on the basis of 100 parts by weight of NBR. When the sulfur is used in a proportion of less than 0.1 part by weight, the cross-linking density will be lowered, with the result of deteriorated abrasion resistance, where flashes of rubber generated by compression will be a problem, whereas when it is used in a proportion of more than 5 parts by weight, the rubber hardness will be increased, resulting in deteriorated sealability.

Sulfur donor compound as a vulcanization promoter of Component (C) is at least one of
Tetrabenzylthiuram disulfide having the following chemical formula : 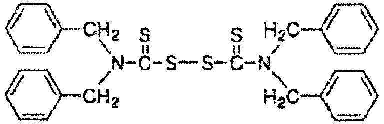 Tetrakis(2-ethylhexyl)thiuram disulfide having the following chemical formula : 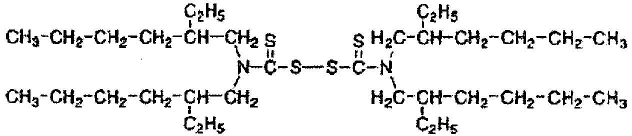 Zinc tetrabenzyldithiocarbamate having the following chemical formula : 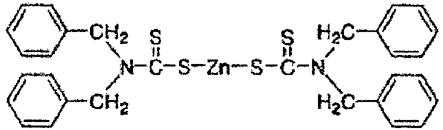 1,6-his(N,N-dibenzylthiocarbamodithio)hexane having the following chemical formula : 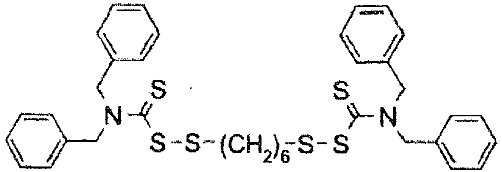 , which can be used in a proportion of 0.5-10 parts by weight, preferably 1-5 parts by weight, on the basis of 100 parts by weight of NBR. The more the vulcanization promoter is used, the higher the vulcanization rate, enabling the vulcanization to take place for a shorter time, but the storage stability of the rubber composition will be deteriorated, resulting in accelerated gelation of the rubber paste.

Besides these 4 vulcanization promoters, other vulcanization promoters incapable of generating nitrosoamines as controlled items of TRGS552 can be used together with the vulcanization promoters of Component (C) as the essential component, which can include, for example, N-cyclohexyl-2-benzothiazolyl sulfenamide, N-t-butyl-2-benzothiazolyl sulfenamide, N,N'-dicyclohexyl-2-benzothiazolyl sulfenamide, hexamethylenetetramine, n-butyl aldehyde aniline, N,N'-diphenylthiourea, N,N'-diethylthiourea, 1,3-di-o-tolylguanidine, 1,3-diphenylguanidine, di-o-tolylguanidine salt of dicatechol borate, 1-o-tolyl biguanide, zinc butylxanthogenate, zinc isopropylxanthogenate, di-2-benzothiazolyl disulfide, 2-mercaptobenzothiazole, or its zinc salt, etc., preferably sulfenamide-based vulcanization promoters.

Simultaneous use of these vulcanization promoters can increase the vulcanization rate and cross-linking density. When the vulcanization rate is so high that the rubber composition is scorched by simultaneous use of a sulfenamide-based vulcanization promoter, the vulcanization rate can be made lower by further addition of di-2-benzothiazolyl disulfide or 2-mercaptobenzothiazole thereto without lowering the cross-linking density, that is, an optimum vulcanization rate can be obtained thereby. Single use of other vulcanization promoters than Component (C) results in a lower vulcanization rate and fails to increase the crosslinking density, so that the rubber vulcanizate will have a poor abrasion resistance, and the resulting rubber-metal laminate having a rubber layer of the rubber vulcanizate will undergo rubber breakage and flow when compressed. Thus, the single use of other vulcanization promoter is not desirable. The other vulcanization promoters, which can be simultaneously used together with Component (C) are in a proportion of not more than 10 parts by weight, preferably 1-7 parts by weight, on the basis of 100 parts by weight of NBR.

Component (B) as a vulcanizing agent and Component (C) as a vulcanization promoter are added to NBR as essential components in this manner. Besides, various compounding agents usually used in the rubber industry, for example, a reinforcing agent such as silica, aluminum oxide, activated calcium carbonate, etc.; a filler such as talc, clay, graphite, calcium silicate, etc.; a processing aid such as stearic acid, palmitic acid, paraffin wax, etc.; an acid acceptor such as zinc oxide, magnesium oxide, hydrotalcite, etc.; an antioxidant ; a plasticizer such as dioctyl sebacate, etc. can be appropriately added thereto. Above all, silica and aluminum oxide are preferably added thereto to improve the abrasion resistance and the adhesiveness towards the adhesive layer.

An abrasion-resistant nitrile rubber (NBR) composition for reciprocal motion-directed seals, which comprises 100 parts by weight of NBR having an acrylonitrile content of 20-35wt.%, 30-100 parts by weight of carbon black, and 5-150% by weight of chromium oxide on the basis of the carbon black is disclosed, for example, in Patent Literature 2.
Patent Literature 2 : JP-B-6-74352

The nitrile rubber-metal laminate, where the nitrile rubber is laminated onto the metal sheet, sometimes undergoes flow or peeling of the rubber when used at high temperatures and high specific pressure, resulting in lowered sealability. Where there are large temperature fluctuations, as in an engine-gasket region, fretting take place on the contact surfaces between the engine and the gasket due to temperature fluctuations, thereby creating a large shearing stress on the gasket. Thus, peeling or abrasion of the rubber layer take place due to the friction between the rubber layer and the metallic sheet, resulting in peeling the rubber layer off from the metallic sheet. This is a problem. Molding products formed from the NBR composition as proposed in Patent Literature 2 undergo such a large friction, and thus suffer from a problem of serious rubber abrasion in the seal sliding region.

To improve the frictional abrasion of rubber, carbon black is usually added thereto in this manner, but it is difficult in the afore-mentioned application to prevent abrasion or peeling of rubber thoroughly by single addition of carbon black.

It has been also proposed to apply a resin coating agent of polytetrafluoroethylene, polyethylene resin, etc. to the rubber surface to lower the friction coefficient, thereby reducing the rubber abrasion. However, such inconvenience as abrasion of rubber in an instant has been so far encountered as a result of peeling or abrasion of the coating agent. Thus, it has been desired to enhance the adhesiveness between the rubber and the adhesive, and also improve the frictional abrasion resistance characteristics of rubber itself.

From the foregoing viewpoint, it is preferable that an NBR composition for a rubber-metal laminate having a higher adhesiveness towards an adhesive layer and improved frictional abrasion resistance characteristics without generating various nitrosoamines as controlled items of TRGS552, PRTR, etc. can further contain 3-100 parts by weight of silica and 60-200 parts by weight of aluminum oxide having an average particle size of 0.1-10µ in on the basis of 100 parts by weight of nitrile rubber, besides the afore-mentioned essential components.

Silica (reinforcible silica) of Component (D) includes, for example, dry process silica produced by a method of thermally decomposing silicon halides or organosilicon compounds, a method of thermally reducing silica sand and air oxidizing the resulting SiO, etc. and wet process silica produced by a method of thermally decomposing sodium silicate, etc. Amorphous silica can be used, where commercially available products, for example, Nipsil LP (a product of Japan Silica Kogyo Co., Ltd.), etc. can be used directly as such. Silica having a specific surface area of about 20 to about 200 m²/g, preferably about 30 to about 100 m²/g, can be usually used. Silica is preferable from the viewpoints of low price, easy handling and good abrasion resistance, though the abrasion resistance is not better than that of ordinary carbon black, but can improve the adhesiveness toward the adhesive.

These silica can be used in a proportion of about 3 to about 100 parts by weight, preferably about 10 to about 80 parts by weight, on the basis of 100 parts by weight of NBR. In a proportion of less than about 3 parts by weight, the desired adhesiveness will not be obtained, and peeling of rubber will take place when exposed to frictional abrasion, whereas in a proportion of more than about 100 parts by weight the rubber hardness will be so high that the rubber elasticity will be lost.

Aluminum oxide as Component (E) having an average particle size (determined by laser diffraction) of 0.1-10 µ m, preferably 0.5-5 µ m, can be used. When the average particle size is more than 10 µ m, the rubber layer will be abraded by aluminum oxide particles, resulting in lowered abrasion resistance. Aluminum oxide can be used in a proportion of about 60 to about 200 parts by weight, preferably about 80 to about 150 parts by weight, on the basis of 100 parts by weight of NBR. When aluminum oxide is used in a proportion of less than about 60 parts by weight, the desired effect of the present invention on improvement of the abrasion resistance and the compression resistance cannot be attained, whereas in a proportion of more than about 200 parts by weight the kneadability and the normal state physical properties will be deteriorated. Within the above-mentioned proportion range, the more the aluminum oxide, the more improved the abrasion resistance.

Aluminum oxide has a higher Mohs' hardness, i.e. 9 than that of quartz, i.e. 7, or that of Ca or Al silicate, i.e. 2, that are generally used minerals for rubber, and has a higher compression resistance at high specific pressure, when added to the rubber. Thus, NBR vulcanizates containing aluminum oxide can be prevented from peeling or flow of rubber, when compressed at high temperature and high specific pressure.

Addition of silica and aluminum oxide having an average particle size of 0.1-10 µ m to nitrile rubber can attain an equivalent mechanical strength (normal state physical properties), etc. to those attained when single carbon black is added to the nitrile rubber, and can also improve the abrasion resistance without substantial deterioration of such properties on one hand, and can attain a distinguished effect on remarkable reduction in rubber cracking due to deterioration by etc., or in peeling due to decreased adhesiveness towards the adhesive, as observed in the case of single addition of carbon black.

Selection of silica capable of making the friction lower and improving the adhesiveness towards the adhesive as a filler and addition of aluminum oxide to the silica having a lower abrasion resistance than that of ordinary carbon black can improve the abrasion resistance without lowering the adhesiveness. Vulcanizates of such an NBR composition can be used as a rubber layer of a rubber-metal laminate comprising a metallic sheet, and an adhesive layer and the rubber layer, successively laminated onto one side or both sides of the metallic sheet, to attain both characteristics of adhesiveness between the rubber layer and the adhesive layer and abrasion resistance of the rubber layer itself.

The present NBR composition can be prepared into a nitrile rubber coating agent by dissolving or dispersing it into a solvent having a boiling point of not higher than 250°C, for example, ketones, aromatic hydrocarbons, or a mixture thereof without kneading or after kneading of only some ingredients by a kneader such as intermix, kneader, Banbury mixer, etc., or through open rolls, etc. The nitrile rubber coating agent can be used to form the rubber layer of a rubber-metal laminate comprising a metallic sheet, an adhesive layer and the rubber layer, the latter two members being successively laminated onto one side or both sides of the metallic sheet.

The metallic sheet includes a stainless steel sheet, a mild steel sheet, a zinc-plated steel sheet, an SPCC steel sheet, a copper sheet, a magnesium sheet, an aluminum sheet, an aluminum die cast sheet, etc. The metallic sheet can be used usually in a defatted state, and can be further surface roughened, if required, by treating the metal surface by shot blast, scotch bride, hair-line, dull finish, etc. In the case of using the metallic sheet as a seal material, thickness of the sheet is generally about 0.1 to about 1mm.

A primer layer is preferably formed on the metallic sheet. The primer layer is expected to improve the heat resistance and the water resistance relating to the rubber adhesion of the rubber-metal laminate considerably, and in the case of using the rubber-metal laminate as a seal material it is desirable to form the primer layer.

For the primer layer, commercially available chemical liquids or well known art can be generally used, for example, a zinc phosphate film, an iron phosphate film, a coating-type chromate film, inorganic films of compounds of such metals as vanadium, zirconium, titanium, molybdenum, tungsten, manganese, zinc, cerium, etc., particularly oxides of these metals, etc., and organic films of silane, phenol resin, expoxy resin, polyurethane, etc. Preferably a primer layer containing an organometallic compound having at least one each of chelate ring and alkoxy group, or the primer layer further containing a metal oxide or silica, and more preferably a primer layer containing these primer layer-constituent components and a hydrolysis condensation product of an amino group-containing alkoxysilane and a vinyl group-containing alkoxysilane can be used. The hydrolysis condensation product can be used even alone.

The organometallic compound includes, for example, an organoaluminum compound such as ethylacetoacetate aluminum diisopropylate, aluminum tris(ethylacetoacetate), aluminum-mono-acetyl acetonate-bis(ethylacetoacetate), aluminum tris(acetylacetate), etc.; an organotitanium compound such as isopropoxytitanium bis(ethylacetoacetate), 1,3-propanedioxytitanium bis(ethylacetoacetate), diisopropoxytitanium bis(acetylacetonate), titanium tetra(acetylacetonate), etc.; an organozirconium compound such as di-n-butoxyzirconium bis(acetylacetonate), di-n-butoxyzirconium bis(ethylacetoacetate), etc. Preferably, organotitanium compounds having chelate ring(s) and alkoxy group(s) represented by the following general formulae can be used : 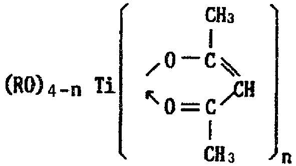 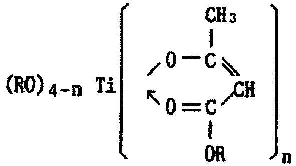 , where R : a lower alkyl group such as CH₃, C₂H₅, n-C₃H₇, i-C₃H₇, n-C₄H₉, i-C₄H₉, etc., and n is an integer of 1-4.

The metal oxide to be added to the primer layer in the same manner as silica includes, for example, alumina, titanium oxide, manganese oxide, zinc oxide, magnesium oxide, zirconium oxide, etc., and can be used in a ratio by weight of not more than 0.9, preferably not more than 0.45, to the organometallic compound. When the metal oxide is used in a ratio by weight of more than 0.9, mixing of the metal oxide with other primer components will be hard to conduct. Thus, this is not preferable.

The amino group-containing alkoxysilane capable of forming a hydrolysis condensation product includes, for example, 3-aminopropyltriethoxysilane, 3-aminopropyltrimethoxysilane, N-(2-aminomethyl)-3-aminopropyltrimethoxysilane, etc. The vinyl group-containing alkoxysilane includes, for example, vinyltrimethoxysilane, vinyltriethoxysilane, vinyltris(β-methoxyethoxy)silane, etc. These alkoxysilanes are converted to a hydrolysis condensation product through simultaneous hydrolysis reaction and polycondensation reaction by mixing an amino group-containing alkoxysilane with water, adjusting pH to an acidic side, and adding a vinyl group-containing alkoxysilane thereto with stirring, while keeping the temperature at 40° -60°C. 25-400 parts by weight, preferably 50-150 parts by weight, of the vinyl group-containing alkoxysilane is mixed to 100 parts by weight of the amino group-containing alkoxysilane. The resulting hydrolysis condensation product is used in a ratio by weight of not more than 3, preferably not more than 1.5, to the organometallic compound. When the hydrolysis condensation product is in a ratio by weight of more than 3, the compatibility with the adhesive will be worse, resulting in decreased adhesiveness.

The primer comprising the afore-mentioned components can be prepared into a solution having a concentration of solid matters of about 0.2 to about 5% by weight in an organic solvent, for example, an alcohol such as methanol, ethanol, isopropyl alcohol, etc., a ketone such as acetone, methyl ethyl ketone, etc., or the like. The organic solvent solution can be mixed with not more than 20% by weight of water, so long as the solution stability can be maintained.

The resulting primer solution can be coated onto a metallic sheet at a coating weight rate of about 50 to about 200 mg/m² by spraying, dipping, brush, roll coater, etc., dried at room temperature or with hot air, and baked at about 100° to about 250°C for about 0.5 to about 20 minutes to form a primer layer.

As an adhesive, commercially available common adhesives for forming films of various resins such as silane, phenol resin, epoxy resin, polyurethane, etc. can be used directly as such. Preferably, an adhesive comprising 2 kinds of novolak type phenol resin and resol type phenol resin, and unvulcanized NBR can be used.

Novolak type phenol resin for use herein includes, for example, resin having a melting point of 80° -150°C, prepared by condensation reaction of phenols having 2 or 3 substitutable nuclear hydrogen atoms in o- and/or p-positions with respect to the phenolic hydroxyl group such as phenol, p-cresol, m-cresol, p-t-butylphenol, etc. or their mixtures with formaldehyde in the presence of an acid catalyst such as oxalic acid, hydrochloric acid, maleic acid, etc. Preferably resins having a melting point of 120 °C or higher prepared from m-cresol and formaldehyde can be used.

Resol type phenol resin for use herein includes, for example, resins prepared by condensation reaction of phenols having 2 or 3 substitutable nuclear hydrogen atoms in o- and/or p-positions with respect to the phenolic hydroxyl group such as phenol, p-cresol, m-cresol, p-t-butylphenol, etc., or their mixture with formaldehyde in the presence of an alkali catalyst such as ammonia, an alkali metal hydroxide, magnesium hydroxide, etc.

As unvulcanized NBR, commercially available various NBRs of extremely high nitrile content (43% or more), high nitrile content (36-42%), intermediate-high nitrile content (31-35%), intermediate nitrile content (25-30%), and low nitrile content (24% or less) can be used directly as such. Preferably, the same NBR as used for rubber layer formation can be used.

The adhesive comprising the afore-mentioned components can be dissolved into a single organic solvent such as a ketone, e.g. methyl ethyl ketone, methyl isobutyl ketone, etc., an aromatic hydrocarbon, e.g. toluene, xylene, etc. or their mixture, and used as a solution.

The afore-mentioned components for a preferable adhesive are used in a proportion of 100 parts by weight of novolak type phenol resin ; 10-1,000 parts by weight, preferably 60-400 parts by weight, of resol type phenol resin, and 30-3,000 parts by weight, preferably 60-900 parts by weight, of unvulcanized NBR. These components are prepared into a vulcanizable adhesive by adding an organic solvent thereto with mixing and stirring so that a concentration of components in total can be about 3 to about 10% by weight. When the resol type phenol resin is used in a proportion of more than 1,000 parts by weight, the adhesiveness of high nitrile rubber material will be lowered, whereas in a proportion of less than 10 parts by weight the adhesiveness towards the metal surface will be lowered. This is not preferable. When the unvulcanized NBR is used in a proportion of more than 3,000 parts by weight, the adhesiveness towards the metal surface will be lowered, and the viscosity will be much increased, resulting in coating work troubles, whereas in a proportion of less than 30 parts by weight compatibility with nitrile rubber as a bonding target will be lowered, resulting in adhesion failure. The adhesive comprising these components can be prepared by dissolving predetermined amounts of the respective components into an organic solvent, followed by mixing with stirring.

The adhesive layer can be formed on the metallic sheet, preferably the metallic sheet provided with the primer layer, by coating the above-mentioned adhesive solution, followed by air drying at room temperature, and drying at about 100° to about 250°C for about 5 to about 30 minutes.

The adhesive layer can be not only in a monolayer structure, but also in a multi-layer structure. For example, a phenolic adhesive layer containing an organometallic compound is formed on the primer layer, and a phenolic adhesive layer containing the above-mentioned nitrile rubber composition is further formed thereon to provide a multi-layer coating of the adhesives, and then a rubber layer is formed thereon. The multi-layer structure can make the adhesiveness of the primer layer and the rubber layer much higher in spite of increased number of coating steps for forming the adhesive layers.

The nitrile rubber coating agent is coated onto the adhesive layer to a thickness of about 10 to about 200 µ m, and vulcanized at about 160° to about 250°C for about 0.5 to about 30 minutes. The resulting rubber-metal laminate can be further provided with a resin-based, or graphite-based coating agent or the like on the rubber layer by coating to prevent rubber sticking.

### EXAMPLES

The present invention will be described in detail below, referring to Examples.

### EXAMPLE 1 (Reference Example)

| | Parts by weight |
|---|---|
| NBR (1041, a product of Nippon Zeon Co.; nitrile content : 41%) | 100 |
| Zinc oxide | 15 |
| Stearic acid | 2 |
| HAF carbon black | 45 |
| FEF carbon black | 20 |
| Antioxidant (Nocrac 3C, a product of Ouchi-Shinko Chemical Co.) | 1 |
| Sulfur | 1.2 |
| Di-2-benzothiazolyl disulfide (Noccelar DM, a product of Ouchi-Shinko Chemical Co.) | 2 |
| N-cyclohexyl-2-benzothiazolyl sulfenamide (Noccelar CZ, a product of Ouchi-Shinko Chemical Co.) | 2 |
| Tetrabenzylthiuram disulfide (Noccelar TBZTD, a product of Ouchi-Shinko Chemical Co.) | 1 |

The foregoing components were kneaded through a kneader and open rolls, and the resulting kneaded product was subjected to determination of vulcanization rate. Vulcanization rate was determined at 180°C by a rotorless rheometer, a product of Toyo Seiki Co., according to JIS K6300-2, where a difference ME (MH-ML) between minimum torque ML and maximum torque MH was obtained from the vulcanization curve to take 50% vulcanization time tc (50) of ME as a measure.

The kneaded product was press vulcanized at 180°C for 6 minutes to prepare two kinds of test pieces, 250mm × 120mm × 2mm and 10mm × 10mm × 0.5mm, which were subjected to determination of hardness and N-nitroamine content in the following procedures :
Hardness : Test piece, 250mm × 120mm × 2mm, was subjected to determination by a type A durometer according to JIS K6253
N-nitrosoamine content : Test piece, 10mm × 10mm × 0.5mm, was kept in a tightly closed vessel filled with a nitrogen gas for 12 days, while N-nitrosodimethylamine gas, N-nitrosodiethylamine gas, N-nitrosodibutylamine gas, N-nitrosopiperidine gas, N-nitrosomorpholine gas, N-nitrosomethylphenylamine gas, and N-nitrosoethylphenylamine gas released from the rubber sheet and regarded as controlled gases under TRGS552 were allowed to be adsorbed on an adsorbent, and then the gas content was determined by gas chromatography

### [Preparation of rubber-metal laminate]

A primer layer was formed on the surface of an alkali-defatted , 0.2mm-thick stainless steel sheet (SUS301, a product of Nisshin Steel Co.), using a silane-based primer comprising 1.0 part by weight of titanium tetra(acetylacetonate), 2.5 parts by weight of alkoxysilane hydrolysis condensation product, 10.0 parts by weight of water, and 86.5 parts by weight of methanol. The alkoxysilane hydrolysis condensation product as used herein was prepared in the following manner.

40 parts by weight of γ -aminopropyltriethoxysilane and 20 parts by weight of water were charged into a flask provided with a stirrer, a heating jacket and a dropping funnel, and pH was adjusted to 4-5 with acetic acid, followed by stirring for a few minutes. With further stirring, 40 parts by weight of vinyltriethoxysilane was slowly dropwise-added thereto through the dropping funnel. After the dropwise-addition, heating and refluxing were conducted at about 60°C for 5 hours, followed by cooling to room temperature to obtain the alkoxysilane hydrolysis condensation product.

A adhesive composition prepared by adding 2 parts by weight of unvulcanized NBR (N-237, a product of Japan Synthetic Rubber Co.; intermediate-high nitrile content) to 90 parts by weight of methyl ethyl ketone, and then adding 5 parts by weight of resol type phenol resin (Kemrock TS1677, a product of Rhode Far East Co.) and 3 parts by weight of chlorinated polyethylene (SE-200Z, a product of Daiso Co.) thereto, was coated onto the primer layer to form an adhesive layer having a thickness of about 2 µ m. Then, a solution of the above-mentioned NBR composition having a concentration of solid matters of 25% by weight in a mixed solvent of toluene and methyl ethyl ketone (weight ratio=9:1) was coated thereon to a thickness of 20 µ m, followed by vulcanization at 230°C for 3 minutes. Then, a dispersion of polyethylene resin containing a polybutadiene resin binder in toluene was coated on the surface of the resulting vulcanized rubber layer to prevent the rubber sticking, followed by a heat treatment with hot air at 230°C for 5 minutes to form a sticking-preventing layer having a thickness of 5 µ m, thereby preparing a rubber-metal laminate.

The resulting rubber-metal laminate was subjected to a compression test in the following procedure :

Compression test : The rubber surface of the rubber-metal laminate was compressed with a convex stainless steel block under conditions of 120°C and 1 ton/cm² for 5 minutes, and the compressed rubber state was visually observed and evaluated according to the following 5 ranks :
5 : No metal exposure substantially with no rubber flow
4 : No metal exposure with small rubber flow
3 : No metal exposure with considerable rubber flow
2 : A little metal exposure with large rubber flow
1 : Large metal exposure with large rubber flow

### EXAMPLE 2 (Reference Example)

In Example 1, no N-cyclohexyl-2-benzothiazolyl sulfenamide was used.

### EXAMPLE 3 (Reference Example)

In Example 1, no di-2-benzothiazolyl disulfide was used.

### EXAMPLE 5 (Reference Example)

In Example 1, 3 parts by weight of zinc tetrabenzyldithiocarbamate (Noccelar ZTC, a product of Ouchi-Shinko Chemical Co.) was further used.

### COMPARATIVE EXAMPLE 1 (Reference Example)

In Example 1, 0.5 parts by weight of di-2-benzothiazolyldisulfide (Noccelar DM) and 2.2 parts by weight of tetramethylthiuram monosulfide (Noccelar TS, a product of Ouchi-Shinko Chemical Co.) were used as vulcanization promoters.

### COMPARATIVE EXAMPLE 2 (Reference Example)

In Example 1, 2.5 parts by weight of N-cyclohexyl-2-benzothiazolyl sulfenamide (Noccelar CZ) and 2 parts by weight of tetramethylthiuram disulfide (Noccelar TT, a product of Ouchi-Shinko Chemical Co.) were used as vulcanization promoters.

### COMPARATIVE EXAMPLE 3 (Reference Example)

In Example 1, 0.5 parts by weight of di-2-benzothiazolyl disulfide (Noccelar DM) and 2 parts by weight of tetramethylthiuram disulfide (Noccelar TT) were used as vulcanization promoters.

### COMPARATIVE EXAMPLE 4 (Reference Example)

In Example 1, no tetrabenzylthiuram disulfide was used.

### COMPARATIVE EXAMPLE 5 (Reference Example)

In Example 1, neither N-cyclohexyl-2-benzothiazolyl sulfenamide nor tetrabenzylthiuram disulfide was used.

Results of determination obtained in the foregoing Examples and Comparative Examples are shown in the following Table 1.

**Table 1**

| | tc(50) (sec.) | Hardness | N-nitrosoamine content (*µ*g/lkg vulcanized rubber) | Compression test |
|---|---|---|---|---|
| Ex. 1 | 55 | 85 | Undetected | 5 |
| " 2 | 60 | 85 | " | 5 |
| " 3 | 40 | 83 | " | 5 |
| " 5 | 52 | 87 | " | 5 |
| Comp. Ex. 1 | 25 | 87 | 2.1 | 5 |
| " 2 | 35 | 84 | 1.8 | 5 |
| " 3 | 40 | 87 | 1.5 | 5 |
| " 4 | 60 | 80 | Undetected | 3 |
| " 5 | 90 | 82 | " | 3 |

EXAMPLE 6

| | Parts by weight |
|---|---|
| NBR (N235S, a product of JSR ; nitrile content: 36%) | 100 |
| Silica (Nipsil LP, a product of Japan Silica Co.) | 20 |
| Aluminum oxide (A32, a product of Nippon Light Metal Co.; average particle size : 1 *µ*m) | 80 |
| Zinc oxide | 5 |
| Stearic acid | 1.5 |
| FEF carbon black | 70 |
| Antioxidant (Nocrac 224, a product of Ouchi-Shinko Chemical Co.) | 2 |
| Sulfur | 2 |
| Di-2-benzothiazolyl disulfide (Noccelar DM) | 2 |
| N-cyclohexyl-2-benzothiazolyl sulfenamide (Noccelar CZ) | 2 |
| Tetrabenzylthiuram disulfide (Noccelar TBZTD) | 1 |

The foregoing components were kneaded through a kneader and open rolls, and the resulting kneaded product was subjected to determination of vulcanization rate in the same manner as in Example 1.

The kneaded product was press vulcanized at 170°C for 20 minutes, and the vulcanized product was subjected to determination of hardness and N-nitrosoamine content in the same manner as in Example 1. Furthermore, a disc-shaped sheet, 120mm in diameter and 2mm in thickness, with a hole, 6.5mm in diameter, at the center thereof was prepared therefrom as a test piece, and subjected to taber abrasion test in the following procedure :
Taber abrasion : determination of abrasion volume according to JIS K6264, where an abrasion volume of less than 0.2ml was evaluated and given as ○ that of 0.2-0.5ml as △, and that of 0.5-0.7 ml as ×

Furthermore, a rubber-metal laminate was prepared in the same manner as in Example 1, and subjected to frictional abrasion test and compression test in the following procedures :
Frictional abrasion test : the rubber-metal laminate test piece was subjected to a reciprocal motion test with a surface performance tester, a product of Shinto Scientific Co., according to JIS K7125 and P8147 corresponding to ASTM D1894, using a hard chromium-plated steel friction ball as a mating member under conditions of moving speed : 400 mm/min., reciprocal motion span : 30mm, temperature : room temperature, and load : 2kg to determine number of reciprocal motions until the adhesive layer was exposed due to the rubber abrasion
Compression test : the rubber surface of the rubber-metal laminate was compressed with a convex stainless steel block under conditions of 150°C and 3 ton/cm² for 5 minutes, and the compressed rubber state was evaluated according to 5 ranks in the same manner as in Example 1

### EXAMPLE 7

In Example 6, the amount of aluminum oxide was changed to 120 parts by weight, and that of FEF carbon black to 40 parts by weight, respectively.

### EXAMPLE 8

In Example 6, the amount of aluminum oxide was changed to 120 parts by weight, that of silica to 60 parts by weight, and that of FEF carbon black to 5 parts by weight, respectively.

### EXAMPLE 9

In Example 6, no N-cyclohexyl-2-benzothiazolyl sulfenamide was used.

### EXAMPLE 10

In Example 6, no di-2-benzothiazolyl disulfide was used.

### EXAMPLE 11

In Example 6, 3 parts by weight of tetrakis(2-ethylhexyl)thiuram disulfide (Noccelar TOT-N) was used in place of tetrabenzylthiuram disulfide.

### EXAMPLE 12

In Example 6, 3 parts by weight of zinc tetrabenzylthiocarbamate (Noccelar ZTC) was further used.

### COMPARATIVE EXAMPLE 6

In Example 6, 2 parts by weight of tetramethylthiuram disulfide (Noccelar TT) was used in place of di-2-benzothiazolyl disulfide and tetrabenzylthiuram disulfide.

### COMPARATIVE EXAMPLE 7

In Example 6, neither silica nor aluminum oxide was used, the amount of FEF carbon black was changed to 120 parts by weight, and 2 parts by weight of tetramethylthiuram disulfide (Noccelar TT) was used in place of di-2-benzothiazolyl disulfide and tetrabenzylthiuram disulfide.

### COMPARATIVE EXAMPLE 8

In Example 6, no tetrabenzylthiuram disulfide was used.

### COMPARATIVE EXAMPLE 9

In Example 6, the amount of aluminum oxide was changed to 50 parts by weight.

### COMPARATIVE EXAMPLE 10

In Example 7, the same amount of calcium carbonate was used in place of aluminum oxide.

Results obtained in the foregoing Examples and Comparative Examples are shown in the following Table 2.

**Table 2**

| | tc(50) (sec.) | Hardness | Taber abrasion | N-nitrosoamine content (µg/1kg vulcanized rubber) | Frictional abrasion test (Number) | Compression test |
|---|---|---|---|---|---|---|
| Ex.6 | 55 | 85 | ○ | Undetected | 1500 | 5 |
| " 7 | 50 | 85 | ○ | " | 2200 | 5 |
| " 8 | 48 | 90 | ○ | " | 2100 | 5 |
| " 9 | 60 | 87 | ○ | " | 1700 | 5 |
| " 10 | 40 | 84 | ○ | " | 1300 | 4 |
| " 11 | 56 | 86 | ○ | " | 1700 | 5 |
| " 12 | 45 | 89 | ○ | " | 2000 | 5 |
| Comp. Ex.6 | 53 | 85 | ○ | 1.8 | 1500 | 5 |
| " 7 | 60 | 90 | △ | 2.1 | 900 | 4 |
| " 8 | 70 | 82 | × | Undetected | 800 | 3 |
| " 9 | 57 | 83 | △ | " | 400 | 3 |
| " 10 | 65 | 90 | × | " | 700 | 2 |

### INDUSTRIAL UTILITY

The present rubber-metal laminate can be suitably used as engine head gaskets, etc. The NBR composition further containing silica and aluminum oxide having an average particle size of 0.1-10 µ m as ingredients of the rubber layer can be used as suitable seal materials for reciprocal motion sliding, for example, for shock absorbers.

## Claims

1. A rubber-metal laminate, which comprises a metallic sheet and a rubber layer formed on the metallic sheet, the rubber layer being formed from an NBR composition comprising (A) 100 parts by weight of nitrile rubber, (B) 0.1-5 parts by weight of sulfur, (C) 0.5-10 parts by weight of at least one sulfur donor compound selected from tetrabenzylthiuram disulfide, zinc tetrabenzyldithiocarbamate, and 1,6-bis(N,N-dibenzylthiocarbamodithio)-hexane, (D) 3-100 parts by weight of silica and (E) 60-200 parts by weight of aluminum oxide having an average particle size of 0.1-10 µm, as a rubber layer-forming composition.

2. A rubber-metal laminate according to Claim 1, wherein the NBR composition further contains not more than 10 parts by weight of other vulcanization promoter incapable of generating nitrosoamines as controlled items of TRGS552 than Component (C), together with Component (C).

3. A rubber-metal laminate according to Claim 1 or 2 for use as a seal material.

## Patentansprüche

1. Kautschukmetalllaminat, das eine Metallfolie und eine Kautschukschicht, die auf der Metallfolie gebildet ist, umfasst, wobei die Kautschukschicht aus einer NBR-Zusammensetzung, die (A) 100 Gew.-Teile Nitrilkautschuk, (B) 0,1 bis 5 Gew.-Teile Schwefel, (C) 0,5 bis 10 Gew.-Teile mindestens einer Schwefel-Donor-Verbindung, ausgewählt aus Tetrabenzylthiuramdisulfid, Zinktetrabenzyldithiocarbamat und 1,6-Bis(N,N-dibenzylthiocarbamodithio)-hexan, (D) 3 bis 100 Gew.-Teile Silica und (E) 60 bis 200 Gew.-Teile Aluminiumoxid mit einer durchschnittlichen Teilchengröße von 0,1 bis 10 µm umfasst, als Kautschukschicht-bildende Zusammensetzung gebildet wird.

2. Kautschukmetalllaminat gemäß Anspruch 1, wobei die NBR-Zusammensetzung ferner nicht mehr als 10 Gew.-Teile eines anderen Vulkanisierungsbeschleunigers als Bestanteil (C), der nicht in der Lage ist, wie die kontrollierten Artikel von TRGS552 Nitrosamine zu erzeugen, zusammen mit dem Bestandteil (C) enthält.

3. Kautschukmetalllaminat gemäß Anspruch 1 oder 2 zur Verwendung als Dichtmaterial.

## Revendications

1. Stratifié de caoutchouc-métal, qui comprend une feuille métallique et une couche de caoutchouc formée sur la feuille métallique, la couche de caoutchouc étant formée à partir d'une composition NBR comprenant (A) 100 parties en poids de caoutchouc nitrile, (B) 0,1 à 5 parties en poids de soufre, (C) 0,5 à 10 parties en poids d'au moins un composé donneur de soufre choisi parmi le disulfure de tétrabenzylthiurame, le tétrabenzyldithiocarbamate de zinc, et le 1,6-bis(N,N-dibenzylthiocarbamodithio)-hexane, (D) 3 à 100 parties en poids de silice et (E) 60 à 200 parties en poids d'oxyde d'aluminium ayant une dimension moyenne des particules de 0,1 à 10 µm, en tant que composition formant une couche de caoutchouc.

2. Stratifié de caoutchouc-métal selon la revendication 1, dans lequel la composition NBR contient en outre pas plus de 10 parties en poids d'un promoteur de vulcanisation, incapable de générer des nitrosamines en tant qu'articles contrôlés de TRGS552, autre que le Composant (C), conjointement avec le Composant (C).

3. Stratifié de caoutchouc-métal selon la revendication 1 ou 2 à utiliser comme matériau d'étanchéité.
